# EUROPEAN PATENT SPECIFICATION

(11) **EP 0 450 889 B1**
(45) Date of publication and mention of the grant of the patent: **18.12.1996**
(21) Application number: 91302826.2
(22) Date of filing: 28.03.1991
(51) Int. Cl.: H04N 5/217, H04N 5/232, H04N 5/14

(54) **Image shift correction for video cameras**
Bildverschiebungskorrektur für eine Videokamera
Correction du décalage d'images pour une caméra vidéo

(30) Priority: 31.03.1990 JP 85693/90
(43) Date of publication of application: 09.10.1991
(73) Proprietor: SONY CORPORATION, Tokyo 141 (JP)
(72) Inventor: Ishizuka, Shigeki, Patents Division, Shinagawa-ku Tokyo 141 (JP); Sasaki, Takayuki, Patents Division, Shinagawa-ku Tokyo 141 (JP); Takahashi, Takao, Patents Division, Shinagawa-ku Tokyo 141 (JP)
(74) Representative: Cotter, Ivan John

(56) References cited:
- EP-A- 0 348 207
- EP-A- 0 392 671
- GB-A- 2 080 993
- US-A- 4 472 741
- US-A- 4 731 651
- PATENT ABSTRACTS OF JAPAN vol. 11, no. 204 (E-520)2 July 1987 & JP-A-62 025 590
- PATENT ABSTRACTS OF JAPAN vol. 15, no. 50 (E-1030)6 February 1991 & JP-A-2 280 471
- PATENT ABSTRACTS OF JAPAN vol. 13, no. 371 (E-807)(3719) 17 August 1989 & JP-A-1 125 064
- PATENT ABSTRACTS OF JAPAN vol. 14, no. 178 (E-915)10 April 1990 & JP-A-2 031 570

## Description

This invention relates to video cameras.

In a known video camera, there has been proposed an image shift correction technique in which image shift is corrected by shifting an image by the amount of the image shift.

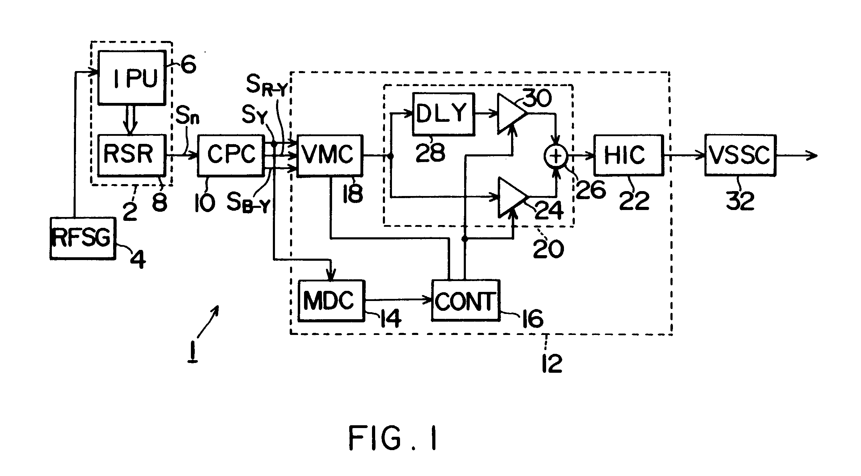

More specifically, a television camera 1, as shown in Figure 1, picks up an image of an object, for example, by means of a charge coupled device (CCD) solid state pick-up device 2. The pick-up device 2 includes an image pick-up unit 6 which has light receiving elements arranged in units of a pixel for horizontal and vertical scanning. In dependence on a reference signal from a reference signal generating circuit 4, the pick-up unit 6 sequentially outputs charges accumulated in each light receiving element to a camera processing circuit 10 through a resistor circuit 8.

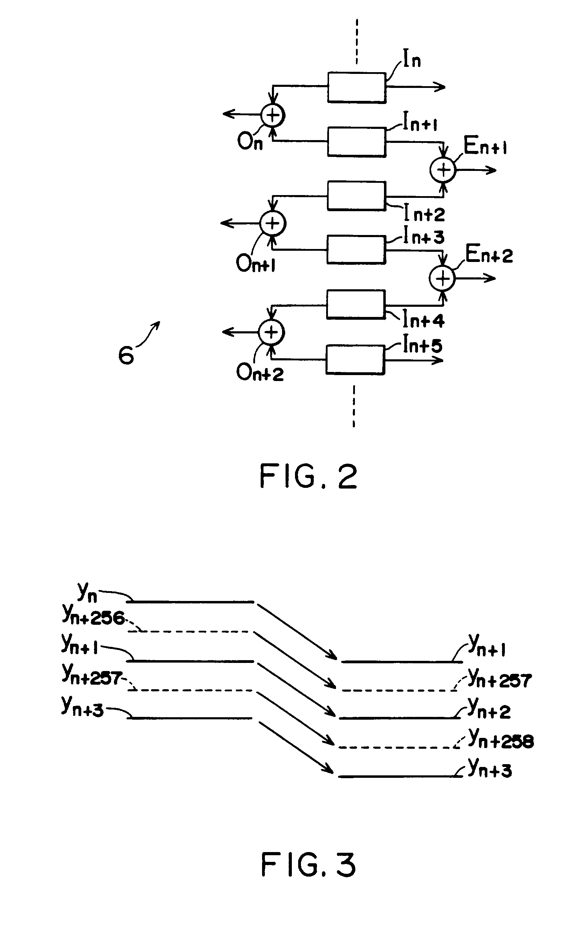

As shown in Figure 2, in the pick-up unit 6, electric charges are sequentially outputted from light receiving elements Iₙ, Iₙ₊₁, ... through adder circuits Eₙ₊₁, Eₙ₊₂, ... for even fields, and through adder circuits Oₙ, Oₙ₊₁ ... for odd fields. Picked-up image signals Sₙ are generated by consecutively arranging output signals of the light receiving elements in an interlace pattern.

The processing circuit 10 converts the picked-up image signals Sₙ to luminance signals S_{Y} and chrominance signals S_{R-Y}, S_{B-Y} and outputs them to an image shift correction circuit 12. In the image shift correction circuit 12, luminance signals S_{Y} are received in a motion detection circuit 14, which detects the direction and magnitude of an image shift by detecting a corresponding motion vector, using frame correlation.

In dependence on the motion vector, a control circuit 16 reads out the luminance signal S_{Y}, and the chrominance signals S_{R-Y}, S_{B-Y} temporarily stored in a video memory circuit 18, thereby to make a parallel displacement of the picked-up image by the amount of the image shift.

For example, as shown in Figure 3, the luminance signals S_{Y} and the chrominance signals S_{R-Y}, S_{B-Y} of lines yₙ, y_{n+256,} yₙ₊₁, yₙ₊₂₅₇, ... are read out at the timing of lines yₙ₊₁, yₙ₊₂₅₇, yₙ₊₂, yₙ₊₂₅₈, ..., respectively, and in this case, an image of the luminance signals S_{Y} and the chrominance signals S_{R-Y}, S_{B-Y} is parallel displaced by two lines.

In this manner, the control circuit 16 corrects the image shift by a pixel in the horizontal direction, by two lines in the vertical direction.

Moreover, the control circuit 16 corrects the image shift to a finer accuracy using a vertical interpolation circuit 20 and a horizontal interpolation circuit 22.

More specifically, in the vertical interpolation circuit 20, output signals of the video memory circuit 18 are amplified in an amplifier circuit 24, and supplied to an adder circuit 26. Output signals of the video memory circuit 18 are also supplied to an amplifier circuit 30 through a delay circuit 28 of one horizontal scanning period, and output signals of the amplifier circuit 30 are supplied to the adder circuit 26. In such a manner, the gains of the amplifier circuits 24 and 30 are controlled by the control circuit 16, and thereby video signals from the video memory circuit 18 are interpolated, so that an image shift of not larger than two lines in the vertical direction is corrected.

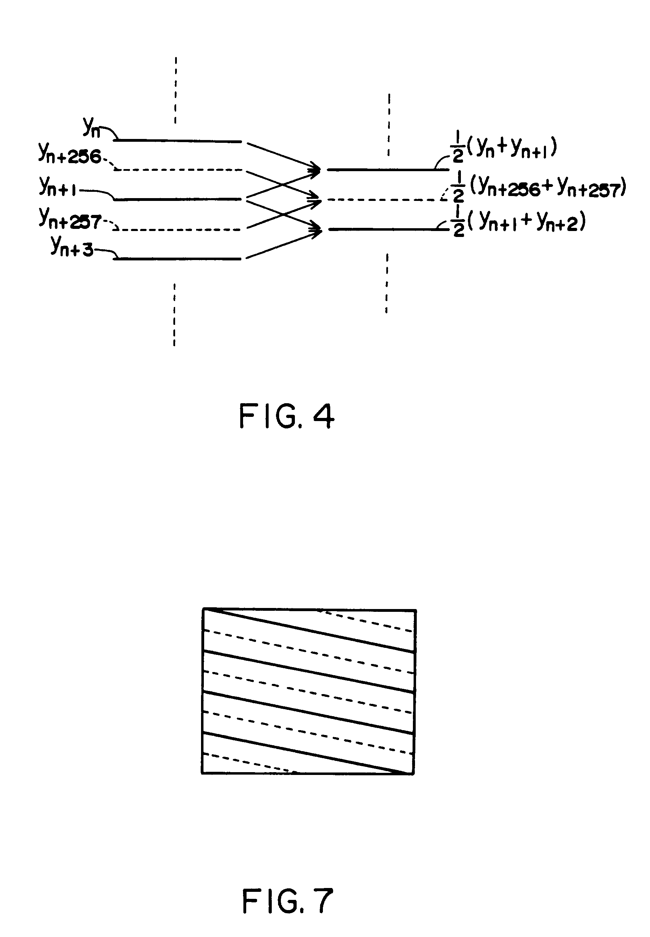

Where an image shift of one line is to be corrected, as shown in Figure 4, the gains of the amplifier circuits 24 and 30 are set to 1/2, and sum signals (yₙ+yₙ₊₁)/2, (yₙ₊₁+yₙ₊₂)/2, ... of adjacent lines yₙ and yₙ₊₁, yₙ₊₁ and yₙ₊₂, ... are outputted for respective fields.

Similarly, in the horizontal interpolation circuit 22, an image shift of less than a pixel is corrected by the use of a delay circuit with a delay time of one clock cycle, in place of the delay circuit 28. In this manner, the image shift correction circuit 12 makes a parallel translation of the picked-up image by the amount of the image shift, so that the image shift can be corrected.

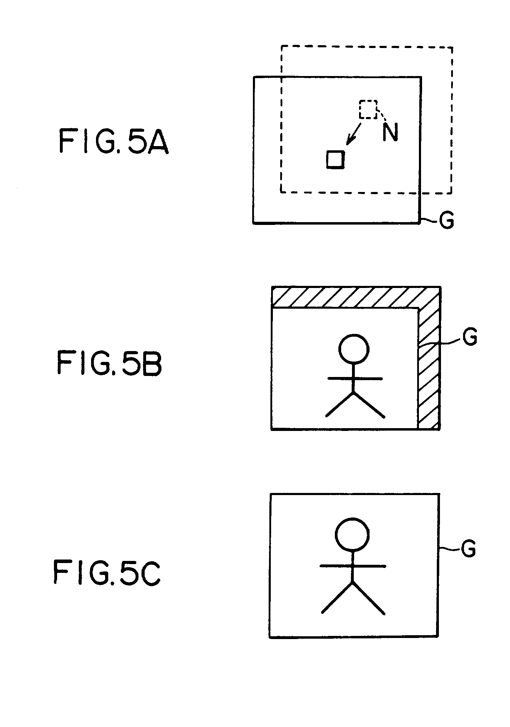

Where in an image G, an object N of which a picture has been taken at the centre of the image is, as shown in Figures 5A to 5C, moved to an upper right corner by an image shift (Figure 5A), the image shift can be corrected by parallel translation of the whole image as indicated by the arrow (Figure 5B).

In this case, the corner of the frame is not within the angle of view, as hatched, and this produces the disadvantage in that the displaced picture becomes degraded in appearance.

For this reason, the control circuit 12 controls timing of reading of the video memory circuit 18 and the gains of the amplifier circuits 24 and 30 to change the amount of a parallel displacement according to the position of the image G, so that the image G is enlarged, and the corner of the frame is not displayed (Figure 5C).

More specifically, at a central portion of the image G, the parallel displacement is performed by the amount of the motion vector, whereas in the peripheral portion of the image G the parallel displacement which is obtained from the motion vector is corrected so as to enlarge the image at the approaches to the edges. In this manner, the image shift is corrected.

Thus, the image shift can be corrected by the image shift correction circuit 12, and the corrected luminance signals and chrominance signals are outputted to a video signal synthesis circuit 32, so that video signals in which image shift has been corrected can be obtained.

Where image shift is corrected by the use of vertical interpolation, it is inevitable that deterioration in vertical resolution occurs.

Moreover, there is another problem in that the vertical relationship of lines between even and odd fields is reversed by outputting sum signals (yₙ+yₙ₊₁)/2, (yₙ₊₁+yₙ₊₂)/2, ... of adjacent lines yₙ and yₙ₊₁, yₙ₊₁ and yₙ₊₂, ... for each field in the horizontal interpolation circuit 22, and an inclined line, for example, is displaced in the shape of notches, which makes the displayed image unsatisfactory.

To solve this problem, a technique to correct an image shift in a unit of a frame has been considered, but this technique is liable to display moving objects in duplicate.

US Patent US-A-4 731 651 discloses apparatus for compensating for movement of a picture of a television signal, the apparatus comprising:
a preprocessor which receives a digitised luminance signal of an 1125-line HDTV signal and converts one field thereof into two identical and non-interlaced 625-line image data components (which can be referred to as fields or frames) which have an offset of 0.5 lines in the vertical direction;
a movement vector detector which receives one only of the image data components and detects a motion vector between successive said image data components;
a pair of field number converters, both connected to the movement vector detector, which receive the image data components and detect the amount of an image shift by the use of field correlation, which correct the image shift on the basis of the result of the detection of said image shift amount, and which output corrected image data components;
a switch which receives the corrected image data components outputted from the respective field number converters and outputs the respective corrected image data components alternately to provide a 625-line digital luminance signal; and
a PAL encoder which receives the switch output, and colour difference signals which have been subjected to the same line number and field number conversion processes as the luminance signal, and produces therefrom a PAL colour signal.

Japanese Patent Application Publication No JP-A-1 125 064, an English language abstract of which appears at PATENT ABSTRACTS OF JAPAN, vol. 13, no. 371 (E-807) [3719], 17 August 1989, discloses an image pick-up device in which, to minimise deterioration in picture quality, fluctuation among picked-up signals is detected as a moving length, the area of a memory (storing a field of picked-up signals) that is to be read is controlled in accordance with the moving length, and the signal read from the memory is interpolated in accordance with the read area.

According to the present invention there is provided a video camera comprising:
image pick-up means comprising vertically consecutive light receiving elements and means for scanning said elements so as to produce successive frames of image information, each said frame comprising an even field produced from even-numbered vertically consecutive said elements and an odd field produced from odd-numbered vertically consecutive said elements, and the scanning of said elements being carried out at such a speed that each said frame is produced in a cycle of one field;
means for deriving a respective luminance signal from each of said even and odd fields;
a single image shift amount detection means responsive to both said luminance signals of said even and odd fields to detect the amount of an image shift by the use of a field correlation of said image information, said detection operation involving detection of both a motion vector between successive said even fields and a motion vector between successive said odd fields;
image shift correction means for correcting the image shift of said image information on the basis of the result of the detection of said image shift amount detection means and outputting the corrected image information; and
video signal conversion means for converting the corrected image information, outputted from the image shift correction means, into a video signal having consecutive even and odd fields.

An embodiment of the invention comprises image pick-up means for outputting image information S_{YO}, S_{YE}, S_{R-YO}, S_{R-YE}, S_{B-YO}, S_{B-YE} of one frame with a cycle of one field; image shift amount detection means for detecting an amount of an image shift on the basis of the image information S_{YO}, S_{YE} by the use of a field correlation of the image information S_{YO} , S_{YE}; an image shift correction means for correcting and outputting the image shift of the image information S_{YO}, S_{YE}, S_{R-YO}, S_{R-YE}, S_{B-YO}, S_{B-YE}; and video signal conversion means for converting the image information outputted from the image shift correction means to video signals representing consecutive odd and even fields with a cycle of a field of the image information S_{YO}, S_{YE}, S_{R-YO}, S_{R-YE}, S_{B-YO}, S_{B-YE}.

The amount of an image shift can be detected with high accuracy by detecting it on the basis of image information S_{YO}, S_{YE}, S_{R-YO}, S_{R-YE}, S_{B-YO}, S_{B-YE}. of one frame comprising consecutive fields.

Furthermore, according to the result of the detection, the image shift of the image information S_{YO}, S_{YE}, S_{R-YO}, S_{R-YE}, S_{B-YO}, S_{B-YE} of one frame comprising consecutive fields is corrected, and then converted to video signals representing consecutive odd and even fields of the image information S_{YO}, S_{YE}, S_{R-YO}, S_{R-YE}, S_{B-YO}, S_{B-YE}. In this manner, the image shift can be corrected, while effectively avoiding degradation in picture quality.

The invention will now be described by way of example with reference to the accompanying drawings, throughout which like parts are referred to by like references, and in which:
Figure 1 is a block diagram showing a known television camera;
Figure 2 is a diagrammatic view of a pick-up device;
Figures 3 and 4 are diagrammatic views for illustrating image shift corrections by means of parallel displacements;
Figures 5A to 5C are diagrammatic views for illustrating image shift correction by enlarging a picture;
Figure 6 is a block diagram illustrating an embodiment of camera incorporating a video tape recorder and according to the present invention;
Figure 7 is a diagrammatic view of picked-up image signals;
Figures 8 and 9 are diagrammatic views for illustrating detection of image shift correction;
Figure 10 is a diagrammatic view for illustrating image shift correction; and
Figure 11 is a block diagram of a second embodiment.

### First Embodiment

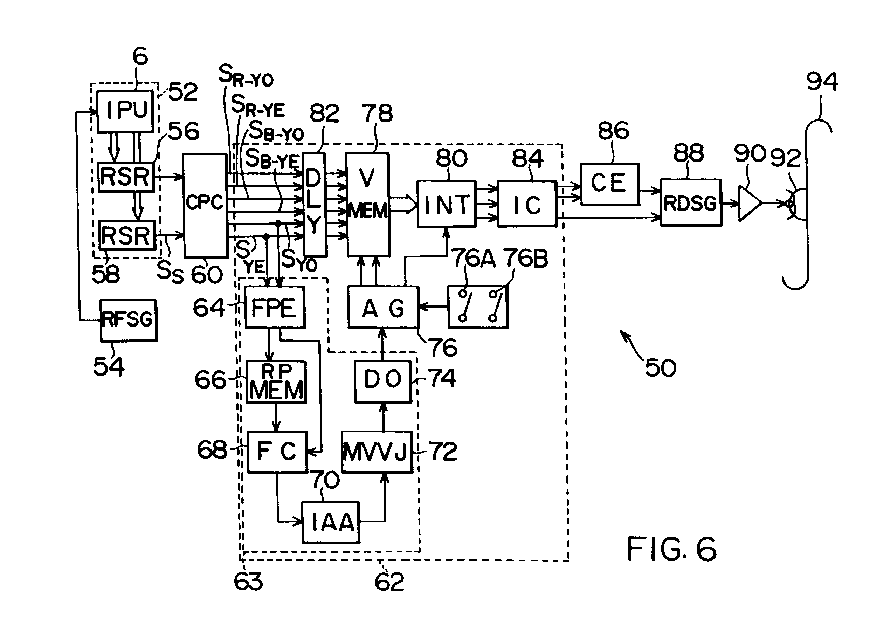

Referring to Figure 6, a camera 50 incorporates a video tape recorder, and an image of an object is picked up by a CCD solid-state image device 52. In the CCD device 52, charges stored in each of the light receiving elements of an image pick-up unit 6 are outputted in dependence on a reference signal outputted from a reference signal generating circuit 54, to a camera processing circuit 60 through resistor circuits 56 and 58.

The resistor circuit 56 reads in and outputs charges accumulated in odd numbered light receiving elements in vertically consecutive light receiving elements, whereas the resistor circuit 58 reads charges accumulated in even numbered light receiving elements.

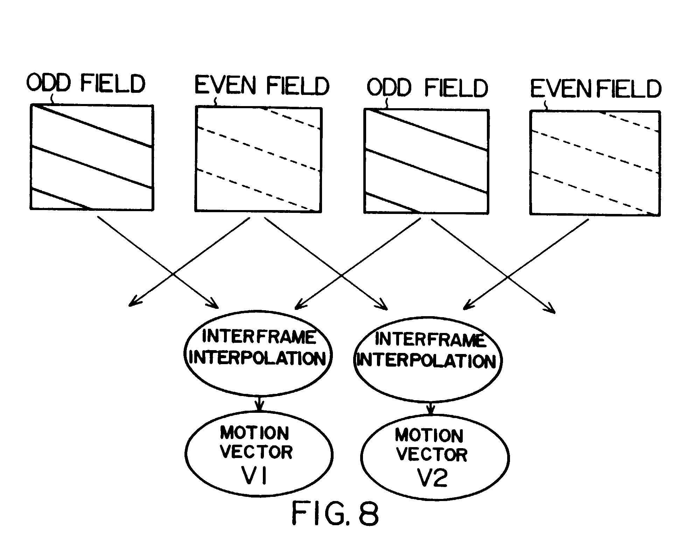

Consequently, picked-up image signals of even and odd fields (that is, as shown by the solid and broken lines) are, as illustrated in Figure 7, obtained through the resistor circuits 56 and 58, respectively.

In the CCD device 52 the operation is carried out in response to reference signals from the reference signal generating circuit 54, and thereby picked-up signals Sₛ which are repeatedly provided with a cycle of 1/60 sec (that is, one field cycle of NTSC interlace video signals) are outputted through the resistor circuits 56 and 58. The picked-up image signals which are consecutive in the order of the interlace can therefore be processed, for example, by reading in output signals of the resistor circuits 56 and 58 with the cycle of 1/60 sec.

In this embodiment, the CCD device 52 thus constitutes an image pick-up device which repeatedly outputs one frame of image information with a cycle of one field.

The processing circuit 60 concurrently performs parallel processing of the output signals of the resistor circuits 56 and 58, and thereby luminance signals S_{YO} and S_{YE}, and chrominance signals S_{R-YO} and S_{R-YE}, and S_{B-YO} and S_{B-YE} of even and odd fields are repeatedly outputted with a cycle of 1/60 sec. An image shift correction circuit 62 accepts luminance signals S_{YO} and S_{YE} of even and odd fields to detect motion vectors.

More specifically, in the image shift correction circuit 62 the luminance signals S_{YO} and S_{YE} are fed to a feature point extraction circuit 64 of a correction amount detection circuit 63. The feature point extraction circuit 64 detects edges of the picked-up image by differentiating the luminance signals S_{YO} and S_{YE}, and sets feature points on the edges at predetermined intervals.

Moreover, the feature point extraction circuit 64 stores the image data of the feature points in a representative point memory circuit 66. In this embodiment, motion vectors are detected with reference to feature points.

Furthermore, the feature point extraction circuit 64 outputs luminance signals S_{YO} and S_{YE} to a field correlation circuit 68 after the setting of the feature points is completed. The representative point memory circuit 66 delays the image data of the feature points with a cycle of 1/60 sec, and outputs it together with coordinate data thereof to the field correlation circuit 68. The field correlation circuit 68 sets a motion vector detection area on the basis of the coordinate data from the representative point member circuit 66, and thereby determines a motion vector detection area around feature points which are set in the previous cycle (that is, feature points which are set about luminance signals S_{YO} and S_{YE} inputted in the previous cycle of 1/60 sec).

Furthermore, within the motion vector detection area, the field correlation circuit 68 sequentially subtracts image data within the motion vector detection area from the image data of feature points of the previous cycle, and outputs the result of the subtraction to an intrafield accumulation adder circuit 70.

In this manner, by the field correlation circuit 68, the image constructed of luminance signals S_{YO} and S_{YE} of the previous cycle is sequentially shifted with a unit of a pixel in the horizontal and vertical directions, and thereby difference data of feature points between the image and another image formed of luminance signals S_{YO} and S_{YE} of the subsequent cycle can be sequentially attained.

The intrafield accumulation adder circuit 70 derives an absolute value of the difference data inputted, and the absolute value is accumulated for each shift position of a feature point.

A motion vector validity judging circuit 72 detects a minimum value from the accumulated sum of the absolute value detected in the intrafield accumulation adder circuit 70. Furthermore, the motion vector validity judging circuit 72 calculates accumulated sums in the vicinity of the minimum value, and these accumulated sums are approximated by a quadratic curve to detect a minimum value. Thus, motion vectors are detected with an accuracy smaller than the pixel unit.

More specifically, a shifted image can be brought into coincidence with an image of the previous cycle by displacing the shifted image by the amount of the shift. Accordingly, if an absolute sum of each difference data is obtained by sequentially moving the image, the minimum value of difference data of each feature point is obtained at a position to which the image is displaced by the amount of the image shift.

That is, the amount of the image shift can be detected by detecting the minimum value of the accumulated value. Even if the background, for example, is slightly changed within an angle of view, it is possible to detect the amount of the image shift.

Moreover, the motion vector validity judging circuit 72 detects accumulated sums in the vicinity of the minimum value detected, and thereby judges the validity of the motion vector detected. That is, in a case where the accumulated sums rapidly decrease, it is judged that the motion vector and the image shift are equal, since feature points are set on the edges.

On the other hand, in a case where there are local minima substantially equal to the minimum of the accumulated sums with a small decrease in the accumulated sums, the detected motion vector and the image shift are not equal in amount. Accordingly, the motion vector validity judging circuit 72 makes a judgement as to whether or not the detected motion vector is equal in amount to the image shift, by detecting accumulated sums in the vicinity of the minimum detected. When the motion vector validity judging circuit 72 judges that they are not equal, it outputs the amount of the image shift immediately previously detected.

On the contrary, when it is judged that the motion vector detected is equal in amount of the image shift, the detected motion vector is outputted as the amount of the image shift.

In this manner, one frame of image information is repeatedly read with a cycle of one field, and a motion vector is detected on the basis of the image information. The amount of image shift can be detected with high accuracy as compared with a prior method in which motion vector is detected by the use of frame correlation.

More specifically, in a case where motion vectors are, as shown in Figure 8, detected from interlaced luminance signals, an image of an object to be compared is obtained only in a cycle of only 1/30 sec.

Accordingly, in a case where motion vectors are detected according to one frame of image information as in this embodiment, they are detected only with the cycle of 1/30 sec, and thus accuracy of correction is deteriorated in a case where image shift correction is conducted on the basis of the motion vectors.

On the contrary, in a case where motion vectors are respectively detected between even fields and between odd fields with a cycle of 1/60 sec as in this embodiment, motion vectors V1 and V2 are detected on the basis of image information of one field, and accordingly accuracy in detect ion is deteriorated.

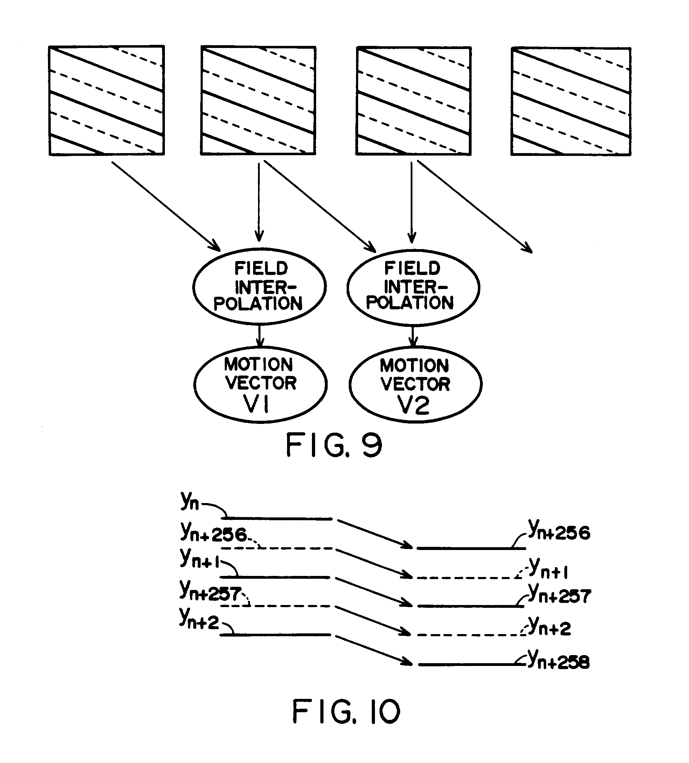

As shown in Figure 9, motion vectors V1, V2, ... can be detected with a cycle of 1/60 sec on the basis of one frame of image information by repeatedly reading in the one frame of image information in a cycle of one field to detect the motion vectors, and accordingly the motion vectors V1, V2, ... can be detected with high accuracy, so that the amount of image shift can be detected with high accuracy.

A displacement operation circuit 74 delays output data thereof by one field cycle and subtracts it from output data of the motion vector validity judging circuit 72 for outputting the resulting data, and thereby correction of the image shift is effected.

More specifically, the amount of image shift calculated from a motion vector with reference to an image of the previous field is converted to a displacement with reference to a predetermined reference field, and thereby the image shift is corrected by correcting the picked-up image according to the displacement.

On the basis of the output data of the displacement operation circuit 74, an address generation circuit 76 forms address data for a video memory circuit 78 and control data for an interpolation circuit 80, and thereby the image shift of the picked-up image is corrected according to the output data of the displacement operation circuit 74.

In this event, the address generation circuit 76 starts the image shift correction operation when an image shift correction operating member 76A on an operation panel is turned on.

When a second operating member 76B on the operation panel is turned off, image shift correction is made only by parallel translation whereas when the second operating member 76B is turned on, image shift correction is carried out by enlarging the image in addition to the parallel translation.

In the video memory circuit 78, luminance signals S_{YO} and S_{YE}, and chrominance signals S_{R-YO} and S_{R-YE}, and S_{B-YO} and S_{B-YE} which are supplied through a delay circuit 82 are sequentially stored, and are sequentially outputted according to address data from the address generation circuit 76.

In this event, the video memory circuit 78 sequentially outputs one frame of consecutive image information with a cycle of one field, and thereby the image shift is corrected with a unit of one line.

More specifically, as shown in Figure 10, the image shift is corrected with a unit of one line by sequentially supplying luminance signals S_{YO} and S_{YE}, and chrominance signals S_{R-YO} and S_{R-YE}, and S_{B-YO} and S_{B-YE} of lines yₙ, yₙ₊₂₅₆, yₙ₊₁, yₙ₊₂₅₇, ... at the timing of lines yₙ₊₂₅₆, yₙ₊₁, Yₙ₊₂₅₇, ... .

Here, the video memory circuit 78 supplies luminance and chrominance signals which are repeated in the order of non-interlace with a cycle of 1/60 sec, to which signals luminance signals S_{YE} and chrominance signals S_{R-YE} and S_{B-YE}, and luminance signal S_{YO} and chrominance signals S_{R-YO} and S_{B-YO} are converted, the luminance signals S_{YE} and chrominance signals S_{R-YE} and S_{B-YE} being formed by repeating image information of even fields with a cycle of 1/60 sec, and the luminance signals S_{YO} and chrominance signals S_{R-YO} and S_{B-YO} being formed by repeating image information of odd fields with a cycle of 1/60 sec.

On the other hand, the interpolation circuit 80 includes an interpolation circuit which has the same configuration as the prior vertical interpolation circuit 20 and horizontal interpolation circuit 22 (Figure 1), but operates at double the frequency, and image shift correction is performed with a unit smaller than one line by interpolating luminance and chrominance signals from the video memory circuit 78.

In a case where image shift correction is carried out on an image shift of interlace signals, correction with a unit smaller than two lines has not generally been effected other than by interpolation. On the other hand, in this embodiment one frame of image information is repeated with a cycle of one field, and thereby a correction in a unit smaller than one line can be achieved by interpolation, so that degradation in vertical resolution can effectively be avoided.

Moreover in this event, the amount of correction can be detected with high accuracy by detecting the image shift correction amount on the basis of one frame of image information which is repeated with a cycle of one field, and image shift correction can be made with high accuracy by doing it on the basis of the correction amount.

Furthermore, reversal of the vertical relationship of lines can be effectively avoided by image shift correction of one frame of image information which is repeated with a cycle of one field, and thereby degradation in picture quality is effective avoided.

An interlace conversion circuit 84 temporarily converts luminance signals and chrominance signals, which are repeated in the order of non-interlace with a cycle of 1/60 sec, to interlaced luminance signals and chrominance signals, by temporarily storing the signals in a memory circuit, and then by outputting them.

A chroma encoder 86 modulates and converts chrominance signals to chroma signals.

A record signal generation circuit 88 performs frequency modulation of the luminance signals as well as low frequency conversion of the chroma signals, thereby to convert the luminance and chrominance signals to record signals, which are then outputted to a magnetic head 92 through a record signal amplifier circuit 90. The video signals which has undergone image shift correction can be thus recorded on a magnetic tape 94.

In this embodiment, the feature point extraction circuit 64, the representative point memory circuit 66, the field correlation circuit 68, the intrafield accumulation adder circuit 70, and the motion vector validity judging circuit 72 form image shift amount detection means for detecting the amount of an image shift by the use of the field correlation of image information on the basis of one frame of consecutive image information in a cycle of one field. On the other hand, the displacement operation circuit 74, the address generation circuit 76, the video memory circuit 78, and the interpolation circuit 80 form a correction circuit for correcting the image shift of the image information by parallel translating and by enlarging the image of the image information thereby to supply the resulting image.

The interlace conversion circuit 84 forms a video signal synthesis circuit for converting the image information from the correction circuit to video signals representing consecutive odd and even fields with a cycle of a field of the image information.

In such a construction, picked-up signals Sₛ which represent one frame of consecutive image information with a cycle of one field are obtained through the image pick-up device 52, and the picked-up signals Sₛ are converted to luminance signals S_{YO} and S_{YE}, and chrominance signals S_{R-YO} and S_{R-YE}, and S_{B-YO} and S_{B-YE} in the processing circuit 60.

The luminance signals S_{YO} and S_{YE} from these signals undergo edge extraction in the feature point extraction circuit 64, and representative points are set on the edges detected.

Furthermore, differential data of the luminance signals S_{YO} and S_{YE} are sequentially provided about the representative points as centres by the field correlation circuit 68, and motion vectors are thereby detected by the intrafield accumulation adder circuit 70 and the motion vector validity judging circuit 72, so that the amount of each image shift is detected.

The amount of an image shift can be detected with high accuracy by detecting it on the basis of luminance signals S_{YO} and S_{YE} which represent one frame of consecutive image information with a cycle of one field.

Accordingly, image shift correction can be performed with high accuracy by making image shift correction on the basis of the result of the detection, and thereby degradation in picture quality can be effectively avoided.

The detected amount of the image shift correction is supplied to the address generation circuit 76, where according to the amount of correction, address data and control data of the interpolation circuit 80 are formed.

The luminance signals S_{YO} and S_{YE}, and chrominance signals S_{R-YO} and S_{R-YE}, and S_{B-YO} and S_{B-YE} which have been temporarily stored in the video memory circuit 78 are outputted after the signals have been subjected to image shift correction with a unit of a line in the vertical scanning direction and with a unit of a pixel in the horizontal direction, and then converted to one frame of consecutive image information with a cycle of one field.

The image information from the video memory circuit 78 undergoes image shift correction with an accuracy of a unit smaller than a pixel and a line, in the interpolation circuit 80, in horizontal and vertical scanning directions, and is then converted to interlace video signals in the interlace conversion circuit 84.

The luminance signals S_{YO} and S_{YE}, and chrominance signals S_{R-YO} and S_{R-YE}, and S_{B-YO} and S_{B-YE} which represent one frame of consecutive image information in a cycle of one field undergo image shift correction, and are then converted to interlace video signals in the interlace conversion circuit 84. The image shift correction can be thus made without degradation in picture quality.

Thus, the amount of an image shift is detected on the basis of luminance signals S_{YO} and S_{YE} which represent one frame of consecutive image information with a cycle of one field. The luminance signals S_{YO} and S_{YE}, and chrominance signals S_{R-YO} and S_{R-YE}, and S_{B-YO} and S_{B-YE} which represent one frame of consecutive image information in a cycle of one field undergo image shift correction, and are then converted to interlace video signals in the interlace conversion circuit 84. In this manner, the image shift correction can be made at high accuracy with degradation in picture quality effectively avoided.

### Second Embodiment

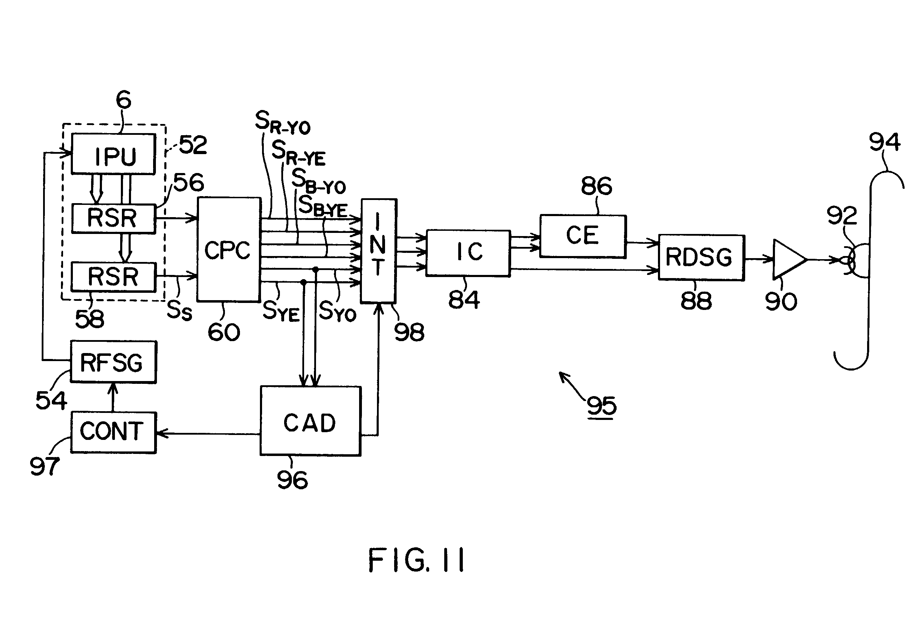

In the embodiment of Figure 11,which comprises a camera 95 incorporating a video tape recorder, image shift correction is carried out approximately by controlling timing of the image pick-up device 52 in place of the video memory circuit 78.

More specifically, in the camera 95 a correction detection circuit 96 detects the amount of image shift by the use of a technique similar to that of the first embodiment, and then detects an image shift correction amount by integrating the result of the detection.

Moreover, according to the result of the detection, the correction detection circuit 96 supplies a control signal to a control circuit 97, and thereby the timing of the image pick-up device 52 is controlled, so that image shift is corrected with a unit of pixel in the horizontal scanning direction and with a unit of one line in the vertical scanning direction.

On the other hand, similarly to the interpolation circuit 80, an interpolation circuit 98 corrects the image shift of the luminance signals S_{YO} and S_{YE} and chrominance signals S_{R-yO} and S_{R-YE} and S_{B-YO} and S_{B-YE} sequentially inputted, with a unit smaller than a pixel and a line in the horizontal and vertical directions, respectively.

With the embodiment of Figure 11, by performing image shift correction by controlling the timing of the image pick-up device 52 in place of the video memory circuit, the image shift correction can be performed with a simple construction, effectively avoiding degradation in picture quality.

### Other Embodiments

In the preceding embodiments, an image of an object is picked up by the use of CCD solid-state image pick-up device. The present invention is however not limited to this, and may be widely applied to various image pick-up means.

Furthermore, in the embodiments above, it described that the present invention is applied to a camera incorporating a video tape recorder. However, the present invention is not restricted to this, but may be applied to a television camera not incorporating a video tape recorder, for example.

## Claims

1. A video camera comprising:
image pick-up means (52, 54) comprising vertically consecutive light receiving elements (6) and means (54, 56, 58) for scanning said elements so as to produce successive frames of image information, each said frame comprising an even field produced from even-numbered vertically consecutive said elements and an odd field produced from odd-numbered vertically consecutive said elements, and the scanning of said elements being carried out at such a speed that each said frame is produced in a cycle of one field;
means (60) for deriving a respective luminance signal (S_{YE}, S_{YO}) from each of said even and odd fields;
a single image shift amount detection means (64, 66, 68, 70, 72) responsive to both said luminance signals (S_{YE}, S_{YO}) of said even and odd fields to detect the amount of an image shift by the use of a field correlation of said image information, said detection operation involving detection of both a motion vector (V2) between successive said even fields and a motion vector (V1) between successive said odd fields;
image shift correction means (74, 76, 78, 80) for correcting the image shift of said image information on the basis of the result of the detection of said image shift amount detection means (64, 66, 68, 70, 72) and outputting the corrected image information; and
video signal conversion means (84) for converting the corrected image information, outputted from the image shift correction means (74, 76, 78, 80), into a video signal having consecutive even and odd fields.

2. A camera according to claim 1 wherein said image shift correction means (74, 76, 78, 80) parallel translates and enlarges the image of said image information to correct the image shift.

3. A camera according to claim 1 wherein said image shift correction means (74, 76, 78, 80) comprises a memory (78), said image information being stored in said memory (78) and being read out from said memory (78) in dependence on an output of said image shift amount detection means (64, 66, 68, 70, 71) thereby to correct the image shift.

4. A camera according to claim 1 wherein said image shift correction means (74, 76, 78, 80) comprises means for controlling the timing of outputting the image information from said image pick-up means (52, 54) in dependence on the output of said image shift amount detection means (64, 66, 68, 70, 72).

5. A camera according to any one of the preceding claims wherein said image pick-up means (52, 54) is a charge coupled device.

6. A camera according to claim 4 wherein said image shift correction means (74, 76, 76, 80) integrates the output of said image shift amount detection means (64, 66, 68, 70, 72).

7. A camera according to any one of the preceding claims which further comprises means (92, 94) for recording or reproducing the video signal.

## Revendications

1. Caméra vidéo, comprenant:
- des moyens de captation d'images (52, 54) comprenant des éléments récepteurs de lumière consécuitfs verticalement (6) et des moyens (54, 56, 58) pour balayer lesdits éléments de manière à produire des images individuelles successives d'informations d'image, chacune desdites images individuelles comprenant une trame paire produite à partir des éléments à numéros pairs parmi lesdits éléments consécutifs verticalement et d'une trame impaire produite à partir des éléments à numéros impairs parmi lesdits éléments consécutifs verticalement, et le bayalage desdits éléments étant effectué à une vitesse telle que chacune desdites images individuelles soit produite dans un cycle d'une trame;
- des moyens (60) pour obtenir un signal de luminance respectif (S_{YE}, S_{YO}) à partir de chacune desdites trames paire et impaire;
- des moyens de détection du décalage d'une image unique (64, 66, 68, 70, 72) sensibles aux deux desdits signaux de luminance (S_{YE}, S_{YO}) desdites trames paire et impaire pour détecter la valeur d'un décalage de l'image par utilisation d'une corrélation de trames desdites informations d'image, ladite opération de détection impliquant la détection d'un vecteur mouvement (V2) entre des trames paires successives et d'un vecteur mouvement (V1) entre des trames impaires successives;
- des moyens de correction du décalage de l'image (74, 76, 78, 80) pour corriger le décalage de l'image desdites informations d'image sur la base du résultat de la détection desdits moyens de détection de la valeur du décalage de l'image (64, 66, 68, 70, 72) et fournir en sortie les informations d'image corrigées; et
- des moyens de conversion de signal vidéo (84) pour convertir les informations d'image corrigées fournies par les moyens de correction du décalage de l'image (74, 76, 78, 80) en un signal vidéo ayant des trames paires et impaires consécutives.

2. Caméra vidéo selon la revendication 1, dans laquelle les moyens de correction du décalage de l'image (74, 76, 78, 80) translatent parallèlement et agrandissent l'image desdites informations d'image pour corriger le décalage de l'image.

3. Caméra vidéo selon la revendication 1, dans laquelle lesdits moyens de correction du décalage de l'image (74, 76, 78, 80) comprennent une mémoire (78), lesdites informations d'image étant mémorisées dans ladite mémoire (78) et étant lues dans ladite mémoire (78) en fonction d'un signal de sortie desdits moyens de détection de la valeur du décalage de l'image (64, 66, 68, 70, 71) pour corriger par ce moyen le décalage de l'image.

4. Caméra vidéo selon la revendication 1, dans laquelle lesdits moyens de correction du décalage de l'image (74, 76, 78, 80) comprennent des moyens pour commander le cadencement de la sortie des informations d'image desdits moyens de captation d'images (52, 54) en fonction du signal de sortie desdits moyens de détection de la valeur du décalage de l'image (64, 66, 68, 70, 72).

5. Caméra vidéo selon l'une quelconque des revendications précédentes, dans laquelle lesdits moyens de captation d'images (52, 54) sont un dispositif à couplage de charges.

6. Caméra vidéo selon la revendication 4, dans laquelle lesdits moyens de correction du décalage de l'image (74, 76, 78, 80) intègrent le signal de sortie desdits moyens de détection de la valeur du décalage de l'image (64, 66, 68, 70, 72).

7. Caméra vidéo selon l'une quelconque des revendications précédentes, qui comprend en outre des moyens (92, 94) pour enregistrer ou reproduire le signal vidéo.

## Patentansprüche

1. Videokamera mit:
- einer Bildaufnahmeeinrichtung (52, 54), die vertikal nacheinanderfolgende Lichtempfangselemente (6) und eine Einrichtung (54, 56, 58) zum Abtasten der Elemente aufweist, um somit nacheinanderfolgende Vollbilder von Bildinformationen zu erzeugen, wobei jedes der Vollbilder ein geradzahliges Teilbild, das von geradzahlig numerierten vertikal nacheinanderfolgenden der Elemente erzeugt wird, und ein ungeradzahliges Teilbild aufweist, das von ungeradzahlig numerierten vertikal nacheinanderfolgenden der Elemente erzeugt wird, und wobei das Abtasten der Elemente mit einer Geschwindigkeit ausgeführt wird, daß jedes Vollbild mit einer Teilbildperiode erzeugt wird,
- einer Einrichtung (60) zum Ableiten eines jeweiligen Helligkeitssignales (S_{YE}, S_{YO}) von jedem der geradzahligen und ungeradzahligen Teilbilder,
- einer Einzelbild-Verschiebeausmaß-Erfassungseinrichtung (64, 66, 68, 70, 72), die auf Helligkeitssignale (S_{YE}, S_{YO}) sowohl der geradzahligen als auch der ungeradzahligen Teilbilder reagiert, um das Ausmaß der Bildverschiebung durch die Verwendung einer Teilbildkorrelation der Bildinformation zu erfassen, wobei der Erfassungsbetrieb die Erfassung von sowohl einem Bewegungsvektor (V2) zwischen nacheinanderfolgenden geradzahligen Teilbildern als auch einem Bewegungsvektor (V1) zwischen nacheinanderfolgenden ungeradzahligen Teilbildern umfaßt,
- einer Bildverschiebungs-Korrektureinrichtung (74, 76, 78, 80), um die Bildverschiebung der Bildinformation auf der Grundlage des Ergebnisses der Erfassung der Bild-Verbiebeausmaß-Erfassungseinrichtung (64, 66, 68, 70, 72) zu korrigieren und die korrigierte Bildinformation auszugeben, und
- einer Videosignal-Umwandlungseinrichtung (84), um die korrigierte von der Bildverschiebungs-Korrektureinrichtung (74, 76, 78, 80) ausgegebene Bildinformation in ein Videosignal mit nacheinanderfolgenden geradzahligen und ungeradzahligen Teilbildern umzuwandeln.

2. Kamera nach Anspruch 1, bei der die Bildverschiebungs-Korrektureinrichtung (74, 76, 78, 80) das Bild der Bildinformation zum Korrigieren der Bildverschiebung parallel übersetzt und vergrößert.

3. Kamera nach Anspruch 1, bei dem die Bildverschiebungs-Korrektureinrichtung (74, 76, 78, 80) einen Speicher (78) aufweist, wobei die Bildinformation in dem Speicher (78) gespeichert ist und aus dem Speicher (78) in Abhängigkeit von einem Ausgangssignal der Bild-Verschiebeausmaß-Erfassungseinrichtung (64, 66, 68, 70, 71) ausgelesen wird, wodurch die Bildverschiebung korrigiert wird.

4. Kamera nach Anspruch 1, bei der die Bildverschiebungs-Korrektureinrichtung (74, 76, 78, 80) eine Einrichtung zum Steuern der Zeitgebung der Bildinformationsausgabe von der Bildaufnahmeeinrichtung (52, 54) in Abhängigkeit des Ausgangssignales der BildVerschiebeausmaß-Erfassungseinrichtung (64, 66, 68, 70, 72), aufweist.

5. Kamera nach einem der vorhergehenden Ansprüche, bei der die Bildaufnahmeeinrichtung (52, 54) eine CCD-Einrichtung bzw. ladungsgekoppelte Einrichtung ist.

6. Kamera nach Anspruch 4, bei der die Bildverschiebungs-Korrektureinrichtung (74, 76, 78, 80) die Ausgangssignale der Bild-Verschiebeausmaß-Erfassungseinrichtung (64, 66, 68, 70, 72) integriert.

7. Kamera nach einem der vorhergehenden Ansprüche, die weiterhin eine Einrichtung (92, 94) aufweist, um das Videosignal aufzuzeichnen oder wiederzugeben.
